# EUROPÄISCHE PATENTSCHRIFT

(11) **EP 1 423 723 B1**
(45) Veröffentlichungstag und Bekanntmachung des Hinweises auf die Patenterteilung: **18.01.2006**
(21) Anmeldenummer: 02754258.8
(22) Anmeldetag: 21.06.2002
(51) Int. Cl.: G01S 7/285

(54) **PULSRADARANORDNUNG**
PULSE RADAR ARRANGEMENT
ENSEMBLE RADAR PULSE

(30) Priorität: 29.08.2001 DE 10142170
(43) Veröffentlichungstag der Anmeldung: 02.06.2004
(73) Patentinhaber: ROBERT BOSCH GMBH, 70442 Stuttgart (DE)
(72) Erfinder: GOTTWALD, Frank, 71287 Weissach (DE); SCHLICK, Michael, 76372 Pfinztal (DE); TOENNESEN, Tore, 72760 Reutlingen (DE); HAENSEL, Jens, 71229 Leonberg (DE)
(86) Internationale Anmeldenummer: PCT/DE2002/002296
(87) Internationale Veröffentlichungsnummer: WO 2003/027702

(56) Entgegenhaltungen:
- WO-A-00/68707
- US-A- 6 067 040

## Beschreibung

Die Erfindung geht aus von einer Pulsradaranordnung insbesondere für Nahbereichs-Pulsradaranwendungen bei Kraftfahrzeugen.

### Stand der Technik

In der Kraftfahrzeugtechnik werden Radarsensoren für die Messung des Abstandes zu Zielen und/oder der Relativgeschwindigkeit bzgl. solcher Ziele außerhalb des Kraftfahrzeuges eingesetzt. Als Ziele kommen z.B. vorausfahrende oder parkende Kraftfahrzeuge, Fußgänger, Radfahrer oder Einrichtungen im Umfeld des Kraftfahrzeugs in Frage. Das Pulsradar arbeitet bspw. bei 24,125 GHz und ist für die Funktionen Stop & Go, Precrash, Tote-Winkel-Detektion, Park-Assistent und Rückfahrhilfe verwendbar.

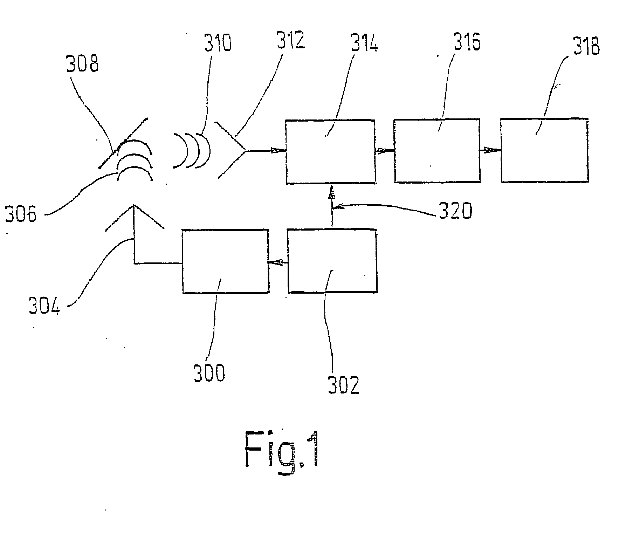

Figur 1 zeigt eine schematische Darstellung einer Radareinrichtung mit einem Korrelationsempfänger des Standes der Technik. Ein Sender 300 wird durch eine Pulserzeugung 302 veranlaßt, über eine Antenne 304 ein Sendesignal 306 abzustrahlen. Das Sendesignal 306 trifft auf ein Zielobjekt 308 wo es reflektiert wird. Das Empfangssignal 310 wird von der Antenne 312 empfangen. Diese Antenne 312 kann mit der Antenne 304 identisch sein. Nach dem Empfang des Empfangsignals 310 durch die Antenne 312 wird dieses dem Empfänger 314 übermittelt und nachfolgend über eine Einheit 316 mit Tiefpaß und Analog/-Digitalwandlung einer Signalauswertung 318 zugeführt. Die Besonderheit bei einem Korrelationsempfänger besteht darin, daß der Empfänger 314 von der Pulserzeugung 302 ein Referenzsignal 320 erhält. Die von dem Empfänger 314 empfangenen Empfangssignale 310 werden in dem Empfänger 314 mit dem Referenzsignal 320 gemischt. Durch die Korrelation kann auf der Grundlage der zeitlichen verzögerung von außen bis zum Empfangen der Radarimpulse bspw. auf die Entfernung eines Zielobjektes geschlossen werden.

Aus der DE 199 26 787 ist eine ähnliche Radareinrichtung bekannt. Dabei wird ein Sendeschalter durch die Impulse eines Generators ein- und ausgeschaltet, so daß während der Pulsdauer eine von einem Oszillator generierte und über eine Gabelung auf den Sendeschalter geleitete Hochfrequenzwelle zur Sendeantenne durchschaltet. Ein Empfangsteil erhält ebenfalls das Ausgangssignal des Generators. Das Empfangssignal, d.h. ein an einem Objekt reflektierter Radarpuls, wird mit dem Oszillatorsignal, das über einen Empfangsschalter zu einem Mischer gelangt, während eines vorgegebenen Zeittores gemischt und ausgewertet.

Auch die US 6,067,040 arbeitet mit einem Sendeschalter, der durch Impulse eines Generators ein- und ausgeschaltet wird. Für den Empfang der reflektierten Radarpulse sind getrennte Züge für 1-Q-Signale vorgesehen. Auch hier wird das Empfangssignal nur während eines vorgegebenen Zeittores gemischt und ausgewertet.

Vorteile der Erfindung

Mit den Maßnahmen der Erfindung kann die Performance gegenüber bekannten Pulsradaranordnungen erweitert werden. Bei der Lösung gemäß US 6,067,040 befindet sich ein empfangsseitiger Pulsmodulator oder/-schalter vor einem Leistungsteiler für die Aufteilung des LO (Local Oszilator) -Signals auf die Mischer in den empfangsseitigen IQ-Zweigen. Dies hat den Nachteil, daß kein Mehrempfängersystem realisiert werden kann und keine gleichzeitige Auswertung mehrerer unterschiedlicher Empfangszellen möglich ist. Bei der erfindungsgemäßen Lösung hingegen sind zwei getrennt steuerbare empfangsseitige Pulsmodulatoren vorgesehen, über die das kontinuierliche Signal der Hochfrequenzquelle, die auch den sendeseitigen Pulsmodulator steuert, auf jeweils einen empfangsseitigen Mischer schaltbar ist. D.h. hier kann im Gegensatz zur US 6,067,040 jeder Mischer in einem Empfangszweig zu unterschiedlichen Zeitpunkten mit dem Signal der Hochfrequenzquelle beaufschlagt werden und auch unterschiedlich lange mit dem Signal der Hochfrequenzquelle verbunden sein. Auf diese Weise können unterschiedliche Betriebsweisen ermöglicht werden, die darüber hinaus noch schnell und flexibel geändert werden können. Eine solche Änderung kann einfach dadurch erfolgen, daß die Verzögerungszeit der Verzögerungsschaltungen über die die empfangsseitigen Pulsmodulatoren ansteuerbar sind, variiert werden. Es können auch mehrere Betriebsarten hintereinander nach einem vorgegebenen Schema automatisch ablaufen.

Werden beide Pulsmodulatoren/-schalter zu gleichen Zeiten geschaltet, so besitzt der Empfangszug bestehend aus zwei Empfangszweigen der Pulsradaranordnung die übliche Funktionsweise. Werden die Schalter zu verschiedenen Zeiten geschaltet bzw. besitzen sie unterschiedlich lange Öffnungszeiten, so lassen sich alle Möglichkeiten eines Mehrempfängersystems ausnutzen.

Es können eine Vielzahl von Einstellungen bzw. Moden eingestellt werden. Ein Detektionsbereich von bspw. bisher 7 m kann nun aufgeteilt werden in z.B. 0 bis 4 m und 4 bis 7 m. Eine Erweiterung des Detektionsbereichs führt nicht zwangsläufig zu einer Verlängerung der Meßzeiten. Ein Kanal kann die 0 bis 4 m abdecken und der andere mit z.B. längerer Meßzeit den Bereich 7 bis 14 m. Im Spezialfall arbeitet die Radaranordnung nach der Erfindung als üblicher IQ-Demodulator. Weiterhin kann sich parallel zur Entfernungsmessung ein Kanal um die CV (Closing Velocity) - Messung kümmern, die z.B. zur Bestimmung der Radialgeschwindigkeit eingesetzt werden kann.

So können insbesondere:
- mehrere Empfangskanäle parallel betrieben werden,
- IQ-Demodulatorbetrieb und Einzelbetrieb ermöglicht sein,
- mehrere Antennen parallel betrieben werden (Multiempfänger-Prinzip),
- die Tastverhältnisse im Sende- und Empfangszug unterschiedlich gewählt werden,
- das Tastverhältnis kann eins sein (reines Dopplerradar),
- die Radarpulse können in ihrer Wiederholfrequenz und/oder Pulsdauer zur Erhöhung der Störsicherheit variiert werden,
- beim Einsatz der doppelten oder dreifachen Sendepulsleistung können mehrere Empfangszellen gleichzeitig untersucht werden,
- bei zu starken Zielen im Nahbereich kann die Leistung der Empfangspulse auf mehrere Empfangszüge aufgeteilt werden, um nachfolgende Empfangssignalverstärker nicht zu übersteuern,
- es kann eine PN-Codierung vorgesehen sein mit einer zur eingestellten Entfernung korrespondierenden Empfangsfolge,
- es ist eine Kreuzechoauswertung möglich,
- im Sendezug kann die Überlagerung zweier orthogonaler Codes vorgesehen sein und empfangsseitig eine Auswertung jeweils nur eines der gesendeten orthogonalen Codes pro Empfangszweig.

### Zeichnungen

Anhand der weiteren Zeichnungen werden Ausführungsbeispiele der Erfindung näher erläutert. Es zeigen
Figur 2 ein Blockschaltbild einer Pulsradaranordnung nach der Erfindung,
Figur 3 ein Blockschaltbild einer Pulsradaranordnung nach der Erfindung mit gemeinsamer Pulsaufbereitung,
Figur 4 ein Blockschaltbild einer Pulsradaranordnung nach der Erfindung mit mehreren Empfangszügen.

### Beschreibung von Ausführungsbeispielen

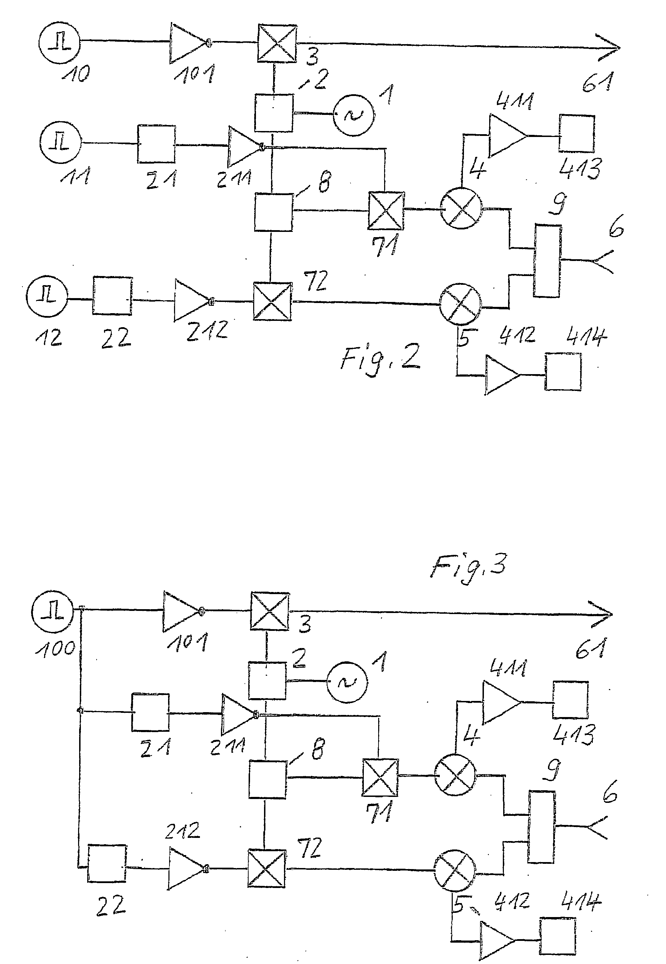

Der in Figur 2 dargestellte erfindungsgemäße Radarsensor weist eine Hochfrequenzquelle 1 auf, die ein kontinuierliches Hochfrequenzsignal (CW-Signal) liefert. Über einen Signalteiler in Form einer Gabelschaltung 2 gelangt dieses Hochfrequenzsignal einerseits an den Eingang eines sendeseitigen Pulsmodulators 3 zur Abgabe von Radarimpulsen an die Sendeantenne 61 und andererseits über einen weiteren Signalteiler 8 direkt an die Eingänge zweier empfangsseitiger Pulsmodulatoren 71 und 72. Die Ausgänge dieser Pulsmodulatoren 71 und 72 sind mit jeweils einem Mischer 4 und 5 verbunden. Die Ausgänge dieser Mischer 4 und 5 wiederum sind über einen Leistungsteiler 9, z.B. einen 3 dB Signalteiler mit der Empfangsantenne 6 verbunden. Es sind zwei Empfangszweige mit zwei Pulsmodulatoren 71, 72 und zwei Mischern 4 und 5 vorgesehen, um eine I/Q (Inphase/Quadraturphase)- Fähigkeit der Radaranordnung zu erreichen. Der Signalteiler 9 dient zur empfangsseitigen Aufteilung des Antennensignals in die Quadraturkomponentensignale I und Q. Die Mischer 4 und 5 sind bspw. als balancierte Mischer in Form eines RAT-RACE-Hybrides realisiert (vgl. hierzu insbesondere die EP 685 9 30 A1 die den Aufbau eines solchen RAT-RACE-Hybrides beschreibt). Über die Pulsmodulatoren 71 und 72 ist das kontinuierliche Signal der Hochfrequenzquelle 1 jeweils auf einen der Mischer 4 und 5 schaltbar. Die Ansteuerung des sendeseitigen Pulsmodulators/-schalters 3 geschieht über eine Pulssignalquelle 10 und eine Sendetorschaltung 101. Die Steuerung der Pulsmodulatoren 71 und 72 erfolgt jeweils getrennt von den Pulssignalquellen 11 und 12 aus, denen jeweils eine Verzögerungsschaltung 21 und 22 sowie eine Empfangstorschaltung 211 und 212 zugeordnet ist.

Ist ein an einem Objekt reflektierter Radarpuls von der Antenne 6 über den Leistungsteiler 9 zum Mischer 4 bzw. 5 gelangt, so wird aus dem kontinuierlichen Signal der Hochfrequenzquelle und dem reflektierten Radarpuls während der Zeit in der der Pulsmodulator das Signal der Hochfrequenzquelle 1 passieren läßt die Hüllkurve des Empfangspulses (ZF-Signal) gebildet. Diese/s Mischsignal/Hüllkurve wird durch den ZF-Verstärker 411 bzw. 412 einer Bandbreite von z.B. 10 kHz verstärkt und einem Empfangsabtaster 413 bzw. 414 zugeführt. Dies geschieht für den I- und den Q-Kanal getrennt (getrennte Empfangs- und Auswertezüge für das I- und Q-Empfangssignal). Um die Laufzeit des empfangenen Radarpulses vergleichen zu können und daraus eine Entfernungsinformation zu erhalten, sind die Verzögerungsschaltungen 21 und 22 erforderlich.

Nach einer definierten Zeit nach der Generierung des Sendepulses, die der Pulslaufzeit für die gewünschte Entfernungszelle entspricht, wird ein breitbandiger Abtaster 413 bzw. 414 mit einem sehr kurzen Abtastpuls beaufschlagt und tastet das Ausgangssignal des ZF-Verstärkers 411 bzw. 412 in der gewählten Entfernungszelle ab. Die Länge des Abtastpulses ist dabei in der Größenordnung der Sendepuls- und ZF-Pulsbreite. Dies geschieht in der Rate der Erzeugung der Sendepulse, nur entsprechend verzögert. Die Variation der Verzögerungszeit erlaubt das Abtasten des gewünschten Entfernungsbereiches identisch zum SRR (Short Range Radar). Der Abtaster detektiert von 0 verschiedene Spannungen und erkennt damit die Pulsrückkehr nach der gewünschten Laufzeit. Nicht kohärente Pulsintegration ist möglich, die das Signalrauschverhältnis proportional zu SQRT (n) verbessert, wobei n die Anzahl der integrierten Pulse ist.

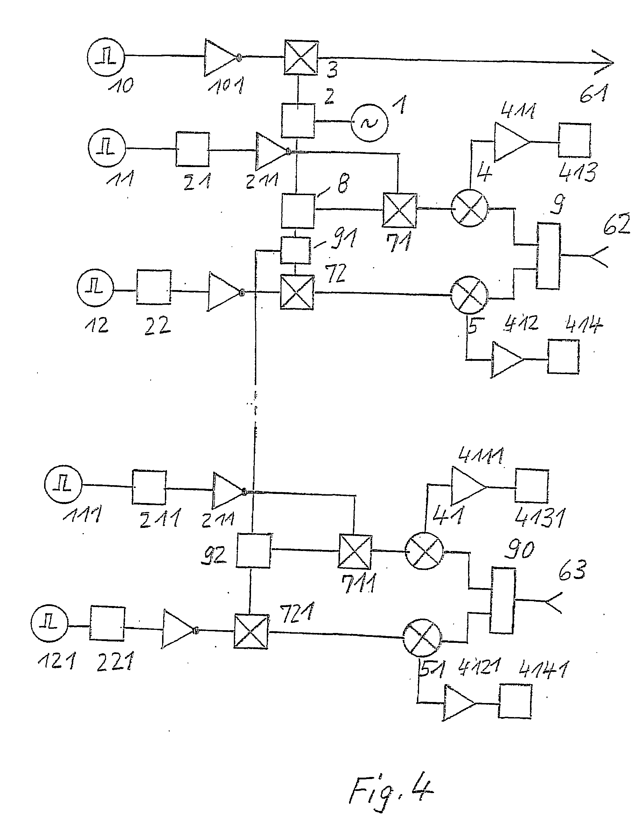

Die Aufbereitung der Steuerpulse für die Pulsmodulatoren 3, 71 und 72 kann gemäß Figur 3 auch gemeinsam durch eine gemeinsame Pulssignalquelle 100 erfolgen. Da die Verzögerungszeiten der Verzögerungsschaltungen 21 und 22 unterschiedlich wählbar sind, können auch hier die Pulsmodulatoren 71 und 72 unabhängig voneinander gesteuert werden. Natürlich kann alternativ auch nur der sendeseitige Pulsmodulator 3 eine eigene Pulssignalquelle 10 aufweisen und für die empfangsseitigen Pulsmodulatoren ist dann eine gemeinsame Pulssignalquelle vorgesehen.

Figur 4 zeigt ein Ausführungsbeispiel mit mehreren Empfangszügen, hier speziell zwei. Die einzelnen Empfangszüge können wie in Figur 2 oder 3 ausgestaltet sein. Wie in den Figuren 2 und 3 weist jeder Mischer 4, 5 bzw. 41, 51 einen separaten Pulsmodulator 71, 72 bzw. 711, 721 auf, der unabhängig vom jeweils anderen Mischer des gleichen Empfangszuges über eine entsprechende Pulssignalquelle 11, 12 bzw. 111, 121, Verzögerungsschaltung 21, 22 bzw. 211, 221 und Empfangstor 212, 213 bzw. 214, 215 steuerbar ist. Die einzelnen Empfangszüge können entweder über eine gemeinsame Empfangsantenne verfügen oder jeweils über separate Empfangsantenne 62, 63. Um die Mischer 41, 51 der weiteren Empfangszüge an die allen Empfangszügen gemeinsame Hochfrequenzquelle 1 anzubinden, sind nachgeordnete weitere Signalteiler 91, 92 erforderlich.

Durch die mindestens zwei Empfangszüge und separate Steuerung der empfangsseitigen Pulsmodulatoren 71, 72 bzw. 711, 712 mit jeweils einstellbaren Verzögerungsschaltungen 21, 22, 211, 221 auf unterschiedliche Verzögerungszeiten sind unterschiedliche Betriebsarten möglich und auch ein schneller Wechsel zwischen diesen unterschiedlichen Betriebsarten je nach den Bedürfnissen des Fahrzeugführers ist möglich. Es können damit insbesondere
- mehrere Kanäle (Mischer) parallel betrieben werden,
- mehrere Antennen parallel betrieben werden (Multiempfänger-Prinzip),
- die Tastverhältnisse im Sende- und den Empfangszügen können unterschiedlich gewählt werden,
- das Tastverhältnis kann eins sein (reines Dopplerradar),
- die Sendepulse können in ihrer Wiederholfrequenz und/oder Pulsdauer insbesondere zur Erhöhung der Störsicherheit variiert werden,
- es ist I/Q-Demodulatorbetrieb und Einzelkanalbetrieb möglich,
- beim Einsatz der doppelten oder dreifachen Sendepulsleistung können bei gleicher Empfindlichkeit mehrere Empfangszellen gleichzeitig ausgewertet werden
- die Entfernungszellen können durch Tasten bzw. Ausblenden des Empfangssignals eingestellt werden,
- bei zu starken Zielen im Nahbereich kann die Empfangspulsleistung geteilt werden, um insbesondere nachfolgende Verstärker nicht zu übersteuern,
- es ist eine Kreuzechoauswertung möglich.

Werden codierte Folgen von Pulsen (PN-Codierung) ausgesendet, werden die Modulatoren in den Empfangszügen, in diesem Falle z.B. Phasendreher, mit einer der eingestellten Entfernung korrespondierenden Empfangsfolge angesteuert. Dies trägt in hohem Maße zur Unterdrückung von Falschzielen bei. Die Kanäle überwachen verschiedene Entfernungsbereiche. Wird eine empfangsseitige Einrichtung auf den PN-Code einer benachbarten Einrichtung eingestellt, ist eine Kreuzechoauswertung möglich.

Im Sendezug kann eine Überlagerung zweier orthogonaler Codes vorgesehen sein und pro Empfangszug jeweils nur eines der gesendeten orthogonalen Signale ausgewertet werden.

Die sendeseitigen und empfangsseitigen Pulssignalquellen 10, 100, 11, 12, 111, 121 oder nur die empfangsseitigen Pulssignalquellen 11, 12, 111, 121 untereinander sind insbesondere bei mehreren Empfangszügen miteinander phasengekoppelt, um definierte Zeitbeziehungen insbesondere für die gleichzeitige Überwachung mehrerer Empfangszellen zu erzielen.

Bei der Erfindung können mehrere Betriebsarten nacheinander nach einem vorgegebenen Ablaufschema eingestellt werden. Hierzu ist lediglich eine gemeinsame Steuerschaltung für die Pulssignalquellen und/oder die Verzögerungsschaltungen notwendig, die jeweils die Zeitfenster für das Aussenden und die Auswertung der Radarpulse nach dem vorgegebenen Ablaufschema vorgeben. Die unterschiedlichen Parameter für die jeweiligen Betriebsarten können in einem in der Steuerschaltung vorgesehenen Speicherbaustein geladen sein oder von einem separaten Speicherbaustein 401 aus zugeführt werden. Die Steuerung der Betriebsarten kann natürlich auch interaktiv ausgestaltet sein, d.h. in Abhängigkeit der Auswertung in einer ersten Betriebsart können geänderte Parameter für weitere Betriebsarten vorgesehen sein.

## Patentansprüche

1. Pulsradaranordnung, insbesondere für Nahbereichs-Pulsradaranwendungen bei Kraftfahrzeugen, umfassend eine Hochfrequenzquelle (1) zur Abgabe eines kontinuierlichen Hochfrequenzsignals, die einerseits mit einem sendeseitigen Pulsmodulator (3) zur Abgabe von Radarpulsen und andererseits mit je einem Pulsmodulator (71, 72) in einem Empfangszweige beschaltet ist, **dadurch gekennzeichnet, daß** die Pulsradaranordnung zwei getrennte steuerbare empfangsseitige Pulsmodulatoren (71, 72) umfaßt, über die das kontinuierliche Signal der Hochfrequenzquelle (1) auf jeweils einen empfangsseitigen Mischer (4, 5) schaltbar ist.

2. Pulsradaranordnung nach Anspruch 1, **dadurch gekennzeichnet, daß** zur Ansteuerung der empfangsseitigen Pulsmodulatoren (71, 72) zwei Pulssignalquellen (11, 12) vorgesehen sind, die jeweils über eine separate Verzögerungsschaltung (21, 22) verfügen.

3. Pulsradaranordnung nach Anspruch 1, **dadurch gekennzeichnet, daß** zur Ansteuerung der empfangsseitigen Pulsmodulatoren (71, 72) eine gemeinsame Pulssignalquelle (100) vorgesehen ist, die mit jeweils einer separaten Verzögerungsschaltung (21, 22) für jeweils einen der empfangsseitigen Pulsmodulatoren (71, 72) beschaltet ist.

4. Pulsradaranordnung nach Anspruch 3, **dadurch gekennzeichnet, daß** die gemeinsame Pulssignalquelle (10) für die empfangsseitigen Pulsmodulatoren (71, 72) auch das Pulssignal für den sendeseitigen Pulsmodulator (3) liefert.

5. Pulsradaranordnung nach einem der Ansprüche 1 bis 4, **dadurch gekennzeichnet, daß** zwischen einer Empfangsantenne (6) und den empfangsseitigen Mischern (4, 5) ein Quadratur-Leistungsteiler (9) vorgesehen ist, so daß dem einen Mischer (4) ein I (Inphase)-Empfangssignal und dem anderen Mischer (5) ein Q (Quadratur)- Empfangssignal zuführbar ist.

6. Pulsradaranordnung nach einem der Ansprüche 1 bis 5, **dadurch gekennzeichnet, daß** eine Signalteilereinrichtung (2, 8) vorgesehen ist zur Aufteilung des kontinuierlichen Signals der Hochfrequenzquelle (1) auf den sendeseitigen Pulsmodulator (2) und auf die in den Empfangszweigen vorgesehenen Pulsmodulatoren (71, 72).

7. Pulsradaranordnung nach einem der Ansprüche 1 bis 3, bzw. 5 oder 6, **dadurch gekennzeichnet, daß** für den sendeseitigen Pulsmodulator (3) eine separate Pulssignalquelle (10) vorgesehen ist.

8. Pulsradaranordnung nach einem der Ansprüche 1 bis 7, **dadurch gekennzeichnet, daß** mindestens ein weiterer Empfangszug mit entsprechender Empfangsantenne (63), empfangsseitigen Mischern (41, 51), empfangsseitigen Pulsmodulatoren (711, 721) sowie gegebenenfalls erforderlichen weiteren Signalteilern (91, 92) und Pulssignalquellen (111, 121) vorgesehen ist.

9. Pulsradaranordnung nach Anspruch 8, **dadurch gekennzeichnet, daß** die Anbindung der Pulsmodulatoren (711, 721) des mindestens einem weiteren Empfangszugs über zusätzliche Signalteiler (91, 92) erfolgt, die der Hochfrequenzquelle (1) nachgeordnet sind.

10. Pulsradaranordnung nach Anspruch 8 oder 9, **dadurch gekennzeichnet, daß** bei mehreren Empfangszügen mehrere Entfernungszellen über entsprechende Auswerteeinrichtungen gleichzeitig auswertbar sind.

11. Pulsradaranordnung nach einem der Ansprüche 1 bis 10, **dadurch gekennzeichnet, daß** die sendeseitige Pulssignalquelle und die empfangsseitigen Pulssignalquellen (10, 11, 12, 111, 121) oder nur die empfangsseitigen Pulssignalquellen (11, 12, 111, 121) untereinander, insbesondere wenn mehrere Empfangszüge vorgesehen sind, miteinander phasengekoppelt sind.

12. Pulsradaranordnung nach einem der Ansprüche 1 bis 11, **dadurch gekennzeichnet, daß** die Tastverhältnisse der Radarpulse im Sendezug und Empfangszug bzw. den Empfangszügen unterschiedlich gewählt sind.

13. Pulsradaranordnung nach einem der Ansprüche 1 bis 12, **dadurch gekennzeichnet, daß** bei einer PN-Codierung der Radarpulse die empfangsseitigen Pulsmodulatoren (71, 72, 711, 721) mit einer zur eingestellten Entfernung korrespondierenden Empfangsfolge ansteuerbar sind.

14. Pulsradaranordnung nach einem der Ansprüche 1 bis 13, **dadurch gekennzeichnet, daß** eine Kreuzechoauswertung vorgesehen ist, d.h. bei mehreren Empfangszügen ist eine empfangsseitige Einrichtung auf den PN-Code einer benachbarten Einrichtung einstellbar.

15. Pulsradareinrichtung nach einem der Ansprüche 1 bis 14, **dadurch gekennzeichnet, daß** im Sendezug die Überlagerung zweier orthogonaler Codes vorgesehen ist und ein Empfangszweig/-zug jeweils nur eines der gesendeten orthogonalen Signale auswertet.

## Claims

1. Pulsed radar arrangement, in particular for near area pulsed radar applications for motor vehicles, comprising
a radio-frequency source (1) for emission of a continuous radio-frequency signal which is connected on the one hand to a transmission-end pulse modulator (3) for emission of radar pulses and on the other hand to in each case one pulse modulator (71, 72) in a reception path, **characterized in that** the pulsed radar arrangement has two separate controllable pulse modulators (71, 72) at the receiving end, via which the continuous signal from the radio-frequency source (1) can be connected to in each case one of the mixers (4, 5) at the receiving end.

2. Pulsed radar arrangement according to Claim 1, **characterized in that** two pulsed signal sources (11, 12) are provided for driving the pulse modulators (71, 72) at the receiving end, and each have a separate delay circuit (21, 22).

3. Pulsed radar arrangement according to Claim 1, **characterized in that** a common pulsed signal source (100) is provided for driving the pulse modulators (71, 72) at the receiving end and is connected to in each case one separate delay circuit (21, 22) for a respective one of the pulse modulators (71, 72) at the receiving end.

4. Pulsed radar arrangement according to Claim 3, **characterized in that** the common pulsed signal source (10) for the pulse modulators (71, 72) at the receiving end also supplies the pulsed signal for the pulse modulator (3) at the transmission end.

5. Pulsed radar arrangement according to one of Claims 1 to 4, **characterized in that** a quadrature power splitter (9) is provided between a receiving antenna (6) and the mixers (4, 5) at the receiving end, such that an I (in-phase) received signal can be supplied to one mixer (4) and a Q (quadrature) received signal can be supplied to the other mixer (5).

6. Pulsed radar arrangement according to one of Claims 1 to 5, **characterized in that** a signal splitter device (2, 8) is provided for splitting the continuous signal from the radio-frequency source (1) between the pulse modulator (2) at the transmission end and the pulse modulators (71, 72) which are provided in the reception paths.

7. Pulsed radar arrangement according to one of Claims 1 to 3, and 5 or 6, **characterized in that** a separate pulsed signal source (10) is provided for the pulse modulator (3) at the transmission end.

8. Pulsed radar arrangement according to one of Claims 1 to 7, **characterized in that** at least one further reception path is provided, with a corresponding receiving antenna (63), mixers (41, 51) at the receiving end, pulse modulators (711, 721) at the receiving end and, if required, further signal splitters (91, 92) and pulsed signal sources (111, 121).

9. Pulsed radar arrangement according to Claim 8, **characterized in that** the pulse modulators (711, 721) in the at least one further reception path are connected via additional signal splitters (91, 92), which are arranged downstream from the radio-frequency source (1).

10. Pulsed radar arrangement according to Claim 8 or 9, **characterized in that**, when there are a plurality of reception paths, a plurality of range cells can be evaluated at the same time by means of appropriate evaluation devices.

11. Pulsed radar arrangement according to one of Claims 1 to 10, **characterized in that** the pulsed signal source at the transmission end and the pulsed signal sources (10, 11, 12, 111, 121) at the receiving end, or only the pulsed signal sources (11, 12, 111, 121) at the receiving end are phase-coupled to one another, particularly when a plurality of reception paths are provided.

12. Pulsed radar arrangement according to one of Claims 1 to 11, **characterized in that** the duty ratios of the radar pulses in the transmission path and reception path or reception paths are chosen to be different.

13. Pulsed radar arrangement according to one of Claims 1 to 12, **characterized in that**, if the radar pulses are PN-coded, the pulse modulators (71, 72, 711, 721) at the receiving end can be driven by a received sequence corresponding to the selected range.

14. Pulsed radar arrangement according to one of Claims 1 to 13, **characterized in that** cross-echo evaluation is provided, that is to say when there are a number of reception paths, a device at the receiving end can be set to the PN code of an adjacent device.

15. Pulsed radar device according to one of Claims 1 to 14, **characterized in that** two orthogonal codes are superimposed in the transmission path and one reception path in each case evaluates only one of the transmitted orthogonal signals.

## Revendications

1. Ensemble radar pulsé, en particulier pour des applications de radar pulsé à courte distance dans des véhicules automobiles, comprenant une source à haute fréquence (1) pour l'émission d'un signal continu à haute fréquence, équipée d'une part d'un modulateur d'impulsions (3) côté émetteur pour l'émission d'impulsions radar et d'autre part chaque fois d'un modulateur d'impulsions (71, 72) dans une branche de réception,
**caractérisé en ce que**
l'ensemble radar pulsé comprend
deux modulateurs d'impulsions commandables séparés (71, 72) côté récepteur, par lesquels le signal continu de la source à haute fréquence (1) peut chaque fois être commuté sur un mélangeur (4, 5) côté récepteur.

2. Ensemble radar pulsé selon la revendication 1,
**caractérisé en ce qu'**
il est prévu, pour la commande des modulateurs d'impulsions (71, 72) côté récepteur, deux sources de signaux pulsés (11, 12) qui disposent chacune d'un circuit de retard séparé (21, 22).

3. Ensemble radar pulsé selon la revendication 1,
**caractérisé en ce qu'**
il est prévu, pour la commande des modulateurs d'impulsions (71, 72) côté récepteur, une source de signaux pulsés commune (100), équipée d'un circuit de retard séparé (21, 22) pour chacun des modulateurs d'impulsions (71, 72) côté récepteur.

4. Ensemble radar pulsé selon la revendication 3,
**caractérisé en ce que**
la source de signaux pulsés commune (100) pour les modulateurs d'impulsions (71, 72) côté récepteur fournit aussi le signal pulsé pour le modulateur d'impulsions (3) côté émetteur.

5. Ensemble radar pulsé selon l'une quelconque des revendications 1 à 4,
**caractérisé en ce qu'**
il est prévu un diviseur de puissance déphasé en quadrature (9), entre une antenne de réception (6) et les mélangeurs (4, 5) côté récepteur, de telle façon qu'un signal de réception I (en phase) puisse être fourni au mélangeur (4) et qu'un signal de réception Q (en quadrature de phase) puisse être fourni à l'autre mélangeur (5).

6. Ensemble radar pulsé selon l'une quelconque des revendications 1 à 5,
**caractérisé en ce qu'**
il est prévu un dispositif de division de signal (2, 8) pour la répartition du signal continu de la source à haute fréquence (1) sur le modulateur d'impulsions (2) côté émetteur et sur les modulateurs d'impulsions (71, 72) prévus dans les branches de réception.

7. Ensemble radar pulsé selon l'une quelconque des revendications 1 à 3, respectivement 5 ou 6,
**caractérisé en ce qu'**
il est prévu une source de signal pulsé séparée (10) pour le modulateur d'impulsions (3) côté émetteur.

8. Ensemble radar pulsé selon l'une quelconque des revendications 1 à 7,
**caractérisé en ce qu'**
il est prévu au moins une autre ligne de réception avec une antenne de réception correspondante (63), des mélangeurs (41, 51) côté récepteur, des modulateurs d'impulsions (711, 721) côté récepteur ainsi que d'autres diviseurs de signal (91, 92) et d'autres sources de signaux pulsés (111, 121) éventuellement nécessaires.

9. Ensemble radar pulsé selon la revendication 8,
**caractérisé en ce que**
le raccordement des modulateurs d'impulsions (711, 721) de l'au moins une autre ligne de réception est effectué par des diviseurs de signal supplémentaires (91, 92) disposés après la source à haute fréquence (1).

10. Ensemble radar pulsé selon la revendication 8 ou 9,
**caractérisé en ce que**
dans le cas de plusieurs lignes de réception, plusieurs cellules de distance peuvent être évaluées simultanément par des dispositifs d'évaluation correspondants.

11. Ensemble radar pulsé selon l'une quelconque des revendications 1 à 10,
**caractérisé en ce que**
la source de signal pulsé côté émetteur et les sources de signaux pulsés (10, 11, 12, 111, 121) côté récepteur ou uniquement les sources de signaux pulsés (11, 12, 111, 121) entre elles sont couplées en phase les unes avec les autres, en particulier lorsqu'il est prévu plusieurs lignes de réception.

12. Ensemble radar pulsé selon l'une quelconque des revendications 1 à 11,
**caractérisé en ce que**
les rapports de balayage des impulsions radar sont choisis différents dans la ligne d'émission et la ligne de réception ou les lignes de réception.

13. Ensemble radar pulsé selon l'une quelconque des revendications 1 à 12,
**caractérisé en ce que**
pour un codage PN des impulsions radar, les modulateurs d'impulsions (71, 72, 711, 721) côté récepteur peuvent être commandés avec une séquence de réception correspondant à la distance réglée.

14. Ensemble radar pulsé selon l'une quelconque des revendications 1 à 13,
**caractérisé en ce qu'**
il est prévu une évaluation d'écho croisée, c'est-à-dire qu'avec plusieurs lignes de réception, un dispositif côté récepteur peut être réglé sur le code PN d'un dispositif voisin.

15. Ensemble radar pulsé selon l'une quelconque des revendications 1 à 14,
**caractérisé en ce qu'**
il est prévu la superposition de deux codes orthogonaux dans la ligne d'émission et une branche/ligne de réception n'évalue à chaque fois qu'un des signaux orthogonaux émis.
